# EUROPEAN PATENT APPLICATION

(11) **EP 0 860 987 A2**
(43) Date of publication of application: **26.08.1998**
(21) Application number: 98102840.0
(22) Date of filing: 19.02.1998
(51) Int. Cl.: H04N 1/401

(54) **Method and apparatus for scanning in slides**

(30) Priority: 22.02.1997 DE 19707161
(71) Applicant: EASTMAN KODAK COMPANY, Rochester, New York 14650 (US)
(72) Inventor: Fecher, Gerd, 70323 Stuttgart (DE); Mutze, Ulrich, Dr., 70323 Stuttgart (DE)
(74) Representative: Reichert, Werner Franz, Dr.

(57) **Abstract**

The method for scanning in slides (6) makes it possible to image the slide (6) being scanned in directly onto a CCD sensor (8'). The pixel elements of the slide (6) are determined by processing the values of the pixel elements of the CCD sensor (8') with the values of the retrieved pixel elements of the reference slide. The apparatus for carrying out the method consists of a commercially available slide projector (2) and an auxiliary device (24'), having an imaging lens (28') and a CCD sensor (8'), which can be inserted into an opening (22) for a projection lens. In addition, a computer (32) is provided, having an implemented software program which is configured so that imaging-related artifacts can be eliminated from the values of the pixel elements of the scanned-in slide (6).

## Description

### FIELD OF THE INVENTION

The invention relates to a method and an apparatus for scanning in slides, comprising a commercially available slide projector and an auxiliary device, insertable into an opening for a projector lens, having an imaging lens and a CCD sensor.

### BACKGROUND OF THE INVENTION

An accessory device for a slide projector is known from German Utility Model U1-296 09 621. The accessory device can be inserted into a slide projector in place of the interchangeable lens. An electronic image sensing device (CCD), by means of which the recorded images can be transferred to a TV unit and/or to a video recorder, is provided in the accessory device. A wide-angle projection lens images a corresponding slide onto a matte screen, ensuring homogeneous illumination. A camera lens placed in front of the image sensing device images the matte screen onto the image sensing device.

Document DE-A-36 09 931 discloses a slide projection device in which the slide is exposed directly onto a video tube device. The video tube is arranged in the lens housing of a conventional slide projector, and possesses a device for transferring the electrical output of the video tube device to a video display. The apparatus also possesses a device for the direct projection of color negatives. The device comprises a filter and a means for reversing the color and saturation output signals of the video tube device.

Document DE-A-32 15 713 describes an apparatus for scanning an image, located on a slide, using a television camera. The slide is projected directly onto the sensing tube of the television camera in order to eliminate the disadvantages of imaging the slide onto a matte screen. Considered as disadvantages in the use of a matte screen are the fact that an additional unit is necessary, and further that the quality of the images sensed by the television camera and reproduced on the monitor is impaired by dust or minor defects on the matte screen. The light output of the lamp is reduced by at least 50 % so that the sensing tube of the television camera is not endangered by the high light output of the lamp.

### SUMMARY OF THE INVENTION

It is the object of the invention to create a method with which slides can be scanned in, and displayed and further processed on a computer, in simple fashion and without additional modifications to a conventional slide projector.

This is achieved, according to the invention, by the fact that the method comprises the following steps:
― imaging a slide onto a CCD sensor;
― recording the values of the pixel elements of the slide using the CCD sensor;
― retrieving the stored values of the individual pixel elements of a reference slide;
― calculating individual values of the pixel elements of the slide by processing the values of the pixel elements of the CCD with the values of the retrieved pixel elements of the reference slide; and
― storing the defined values of the pixel elements in a memory region provided for them.

A further object of the invention is to create an apparatus with which slides can be easily and economically scanned in and electronically modified or corrected in terms of the illumination properties of the projection lamp, in order to obtain an artifact-free reproduction of the scanned-in slide.

This is achieved, according to the invention, by the fact that a computer is provided, having an implemented software program which is configured so that imaging-related artifacts can be eliminated from the values of the pixel elements of scanned-in slides.

### ADVANTAGES

The advantage of the method is that commercially available slide projectors can be used for the slide scanner, and that the use of a matte screen can be dispensed with. The slides are imaged directly onto the CCD sensor. Homogeneous illumination of the slide, as is attained with the matte screen, is achieved by electronic methods, by correlating the image data of the sensed slide with the image data of a reference slide.

The advantage of the apparatus is that a commercially available slide projector can be used for scanning in and archiving. The auxiliary device required for scanning, with imaging lens and CCD sensor, must simply be inserted into the opening for the projection lens of the slide projector, so that no modifications to the slide projector itself are required. The slide, illuminated by the lamp of the slide projector, is imaged directly onto the CCD sensor. A matte screen, required to achieve homogeneous illumination, is not provided. This eliminates any impairment in quality due to the grain of the matte screen.

Further advantageous embodiments of the invention are evident from the subclaims.

### BRIEF DESCRIPTION OF THE DRAWINGS

The subject of the invention will be described with reference to the embodiment depicted in the drawings, in which:
FIG. 1 shows a schematic configuration of an apparatus according to the related art;
FIG. 2 shows a schematic configuration of the apparatus in cross section;
FIG. 3 shows a flow chart for determining the data of a reference slide; and
FIG. 4 shows a flow chart depicting the sequence from imaging of a slide to obtaining a corrected image.

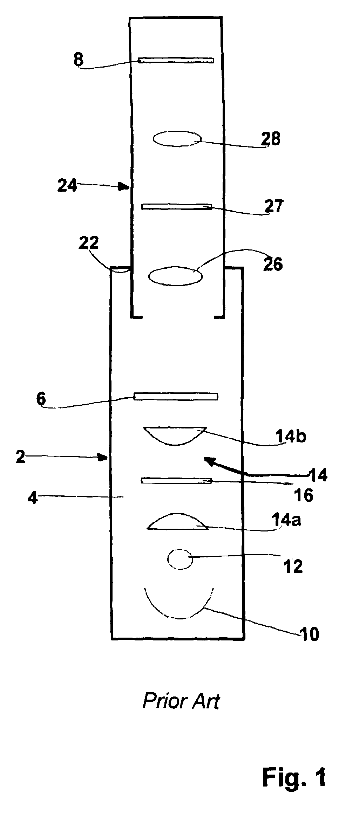

Fig. 1 shows a slide projector 2 with an auxiliary device 24 according to the prior art, for scanning in one or more slides, inserted into the slide projector 2. An optical system 4 provided in slide projector 2, for example reflector 10, lamp 12, condenser 14, and optical filter 16, is used to illuminate a slide 6 that is to be imaged. Auxiliary device 24 - which is made up of a first imaging lens 26 or a first imaging system 26, a matte screen 27, and a second imaging lens 28 or a second imaging system 28 and a CCD sensor 8 - is inserted into an opening 22 for a projection lens (not shown). Matte screen 27 is configured in terms of its diffusion properties in such a way that imaging of the image created on matte screen 27 is possible. First imaging lens 26 (or the first optical system) forms the image of slide 6 on the matte screen 27. Second imaging lens 28 (or the second optical system) forms the image of slide 6 on the matte screen on CCD sensor 8. The result of the intermediate image on the matte screen 27 is that all the light rays from all directions contribute to an intermediate image. This allows uniformly good illumination of the CCD sensor 8 in the imaging plane.

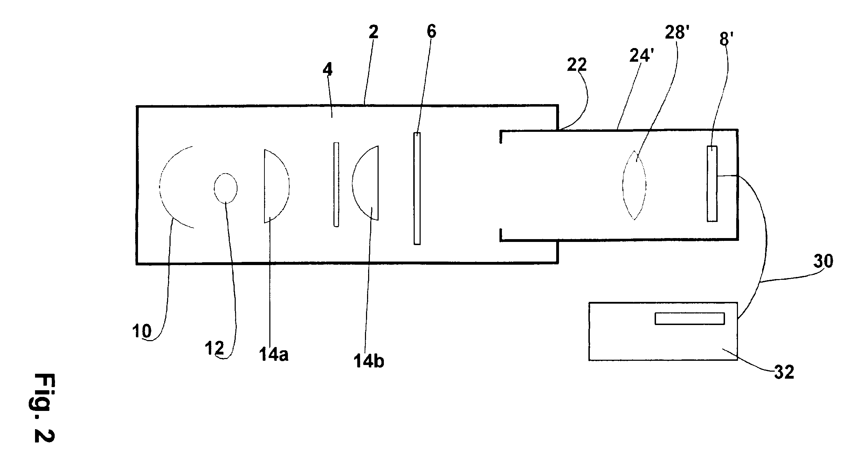

Fig. 2 schematically depicts the apparatus according to the invention. Elements or components already known from the prior art (see Fig. 1) are designated with the same reference numerals. A commercially available slide projector 2 is once again used for the apparatus for scanning in slides. The optical system 4 of slide projector 2 consists substantially of the components disclosed in Fig. 1. An auxiliary device 24', which comprises a CCD sensor 8' and an imaging lens 28' placed in front of it, is inserted into opening 22 for the projection lens. Slide 6, illuminated by lamp 12 of slide projector 2, is imaged directly onto the CCD sensor 8' by means of imaging lens 28'. Charges are generated in the individual pixels of CCD sensor 8' in accordance with the image on the slide 6. The values corresponding to the charges in the individual pixels of the CCD sensor 8' are sent via a corresponding data line 30 to a computer 32. A software program which corrects the individual pixel of the slide 6 in accordance with the data of a reference slide is implemented in the computer 32. The data for the individual pixel of the reference slide are stored in the memory of the computer 32, and can be retrieved therefrom as needed. It is self-evident that different formats of reference slides are available for the different slide formats.

The reference slides and the corresponding program are required in order to eliminate the design-related artifacts which are imaged, with varying degrees of sharpness, by the imaging lens 28' or the imaging lens system 14, and also by the lamp 12 and the mirror 10. The result is artifacts in the form of brighter or darker areas in the image projected onto the CCD sensor 8'. As already mentioned, the prior art uses a matte screen 27 to eliminate these artifacts to the greatest extent possible. According to the invention, a reference slide together with a suitable software program is used for the purpose. Matte screen 27 of the prior art is thus no longer needed. The format of the reference slides is, in this context, dimensioned so that it can cover both horizontal-format and a vertical-format slides.

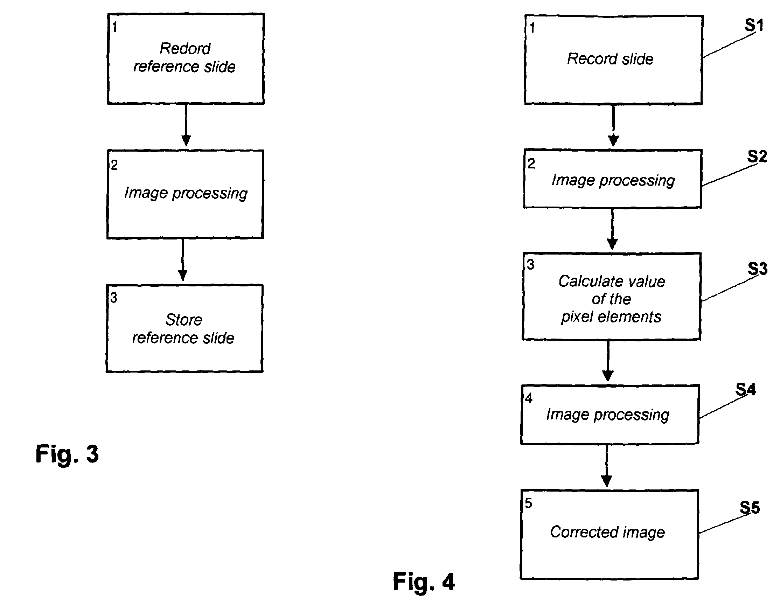

The method for determining the data of a reference slide is depicted in Fig. 3. For this purpose, the corresponding reference slide is transilluminated using the apparatus disclosed in Fig. 2, and the image of said reference slide is imaged directly onto the CCD sensor 8'. The values of the individual pixels of the CCD sensor 8' are read out, and transferred to a computer 32. Processing of the image data of the reference slide is performed by means of a software program. The image data of the reference slide can be, for example, smoothed, filtered, or converted into a neutral density. The algorithms used to process the image data do not need to be discussed in further detail here, since they are state of the prior art. The data obtained for the individual pixels after image processing of the image data of the reference slide are stored in a memory provided for the purpose. The memory can be the hard drive, a floppy disk, or the RAM of the image-processing computer 32.

The corrected or processed data of the reference slide are stored in the memory of the computer, and can be retrieved from memory at any time for correction of the slide imaged on CCD sensor 8' (see Fig. 4). As mentioned above, the values of the individual pixels of the CCD sensor 8' are read out, and the image of the slide just recorded is displayed on the monitor of computer 32 (step S1, imaging). At this stage, no modifications or corrections of any kind have been made to the image data. In the next step S2, filtering or edge improvement operations or the like can be performed on the image data of the recorded slide comprising the individual pixels. In a next step S3, the stored image data of the reference slide are retrieved from the memory and correlated with the image data of the recorded and already processed slide, in such a way that the aforementioned artifacts disappear. For this purpose, the mutually corresponding pixels of the recorded slides are respectively divided by the pixels of the reference slide. A further possibility would be to multiply the mutually corresponding pixels of the recorded slide respectively by the reciprocal values of the pixels of the reference slide. Calculation of the image data of the slide can be followed by a further step S4 in which further filtering, edge improvement, etc. operations are additionally performed. Finally (step S5) a calculated image is available that is free of artifacts and can be made available to the user in any fashion, for example by display on the monitor (not shown), a printout, or storage.

The invention has been described with reference to a preferred embodiments, but it will be understood that variations and modifications can be effected within the spirit and scope of the invention.

## Claims

1. A method for scanning in slides (6), comprising the steps of:
― imaging a slide onto a CCD sensor (8');
― recording values of individual pixel elements of the slide using the CCD sensor (8');
― retrieving the stored values of the individual pixel elements of a reference slide;
― calculating the individual values of the pixel elements of the slide by processing the pixel values of the CCD sensor (8') with the pixel values of the retrieved pixel elements of the reference slide; and
― storing the defined values of the pixel elements in a memory region provided for them.

2. The method according to Claim 1, wherein calculation of the pixel elements of the slide (6) is accomplished by dividing the recorded values of the pixel elements of the slide by the values of the pixel elements of the reference slide.

3. The method as defined in Claim 1, wherein calculation of the pixel elements of the slide (6) is accomplished by multiplying the recorded values of the pixel elements of the slide by the reciprocals of the values of the pixel elements of the reference slide.

4. The method as defined in Claim 1, wherein the reference slide is a neutral-density slide.

5. The method as defined in Claim 1, wherein an image processing step (S2, S4) is performed before or after correlation of the pixel elements of the slide (6) with the values of the pixel elements of the reference slide.

6. The method as defined in Claim 5, wherein the image processing step comprises filtering, edge improvement, or the like.

7. The method as defined in Claim 1, wherein the reference slide is recorded each time before recording a slide in order to compensate for lamp fluctuations.

8. An apparatus for scanning in slides, comprising of a commercially available slide projector (2) and an auxiliary device (24'), having an imaging lens (28') and a CCD sensor (8'), which can be inserted into an opening (22) for a projection lens, a computer (32) is provided, having an implemented software program which is configured so that imaging-related artifacts can be eliminated from the values of the pixel elements of the scanned-in slide (6).

9. The apparatus as defined in Claim 8, wherein the software reads out from a memory values for pixel elements of a reference slide, and correlates each value of a pixel element with a corresponding value of a pixel element of the scanned-in slide (6).

10. The apparatus as defined in Claim 9, wherein a slide with a known image content can be used to determine the values for the pixel elements of the reference slide.

11. The apparatus as defined in Claim 10, wherein the reference slide is a neutral-density slide.

12. Software stored on a data carrior or implemented in a computer, such that a slide to be scanned is imaged directly onto a CCD sensor (8 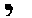 ), each value of each individual pixel elemnt of the CCD sensor (8 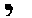 ) is calculated with a corresponding value of a pixel element of a reference slide and the result of the calculation is displayed on a screen of a computer or stored in a memory of a computer.

13. Software according to claim 12, characterized in that a matte screen is not needed for imaging the slide onto the CCD sensor.
